# EUROPÄISCHE PATENTSCHRIFT

(11) **EP 1 732 204 B1**
(45) Veröffentlichungstag und Bekanntmachung des Hinweises auf die Patenterteilung: **07.05.2008**
(21) Anmeldenummer: 05405373.1
(22) Anmeldetag: 08.06.2005
(51) Int. Cl.: H02P 6/00, H02K 16/04

(54) **Verfahren zum Betrieb einer rotierenden elektrischen Maschine sowie Vorrichtung zur Durchführung des Verfahrens**
Method for driving a rotary electrical machine and device for carrying out the method.
Procédé de commande d'une machine électrique tournante et dispositif mettant en oeuvre ledit procédé

(43) Veröffentlichungstag der Anmeldung: 13.12.2006
(73) Patentinhaber: ABB Schweiz AG, 5400 Baden (CH)
(72) Erfinder: Schroderus, Petri M., 02770 Espoo (FI); Ämmälä, Petteri, 5405 Baden-Dättwil (CH); Burzanowska, Halina, 5417 Untersiggenthal (CH)
(74) Vertreter: Berner, Thomas

(56) Entgegenhaltungen:
- EP-A- 1 521 356
- DE-A1- 19 835 576
- US-A- 4 349 772
- US-A- 4 434 389
- US-A- 6 118 246

## Beschreibung

### Technisches Gebiet

Die Erfindung bezieht sich auf das Gebiet der Betriebsverfahren rotierender elektrischer Maschinen. Sie geht aus von einem Verfahren zum Betrieb einer rotierenden elektrischen Maschine sowie von einer Vorrichtung zur Durchführung des Verfahrens gemäss dem Oberbegriff der unabhängigen Ansprüche.

### Stand der Technik

Vorrichtungen für Verfahren zum Betrieb von rotierenden elektrischen Maschinen werden heute vermehrt benötigt und eingesetzt. Eine geeignete Vorrichtung ist beispielsweise in der EP 1 521 356 A2 offenbart. Darin ist eine rotierende elektrische Maschine angegeben, welche zwei Statorwicklungssätze aufweist. Weiterhin ist für jeden Statorwicklungssatz zu dessen Speisung jeweils eine zugehörige Umrichtereinheit vorgesehen. Für jede der Umrichtereinheiten ist jeweils eine zugehörige Regelungseinrichtung zur Ansteuerung der zugehörigen Umrichtereinheit mittels eines Ansteuersignals vorgesehen. Ferner sind Messmittel zur Messung der Ströme eines Statorwicklungssatzes vorgesehen, welche gemessenen Ströme der zugehörigen Regelungseinrichtung zugeführt werden, wobei diese Regelungseinrichtung als sogenannter "Master" agiert, d.h. die gemessenen Ströme der "Master"-Regelungseinrichtung der anderen Regelungseinrichtung, welche als sogenannter "Follower" agiert, vorgibt. Die Vorgabe, d.h. die gemessenen Ströme, erfolgt über eine Datenleitung. Auf die von der "Master"-Regelungseinrichtung vorgegebenen Ströme gibt dann die "Follower"-Regelungseinrichtung ein entsprechendes Ansteuersignal an ihre zugehörige Umrichtereinrichtung aus, d.h. das Ansteuersignal der "Follower"-Regelungseinrichtung ist abhängig von der Vorgabe der "Master"-Regelungseinrichtung, welche Vorgabe eine Referenz darstellt.

Problematisch bei einem Verfahren zum Betrieb einer rotierenden elektrischen Maschine sowie bei der zugehörigen Vorrichtung zur Durchführung des Verfahren nach der EP 1 521 356 A2 ist, dass die eine Regelungseinrichtung, im speziellen die "Follower"-Regelungseinrichtung, abhängig von der anderen Regelungseinrichtung, im speziellen von der "Master"-Regelungseinrichtung, ist. Eine echte Unabhängigkeit und Redundanz der Regelungseinrichtungen mit ihren zugehörigen Umrichtereinheiten und damit eine separate unabhängige Regelung beziehungsweise Beeinflussung elektrischer Grössen der jeweiligen Statorwicklungssätze, insbesondere der Ströme eines jeden Statorwicklungssatzes, ist somit nicht gegeben.

### Darstellung der Erfindung

Aufgabe der Erfindung ist es deshalb, ein Verfahren zum Betrieb einer rotierenden elektrischen Maschine anzugeben, welche eine redundante und unabhängige Regelung beziehungsweise Beeinflussung elektrischer Grössen der einzelnen Statorwicklungssätze der rotierenden elektrischen Maschine ermöglicht. Ferner ist eine Vorrichtung anzugeben, welche sehr einfach, robust und mit einem geringen Schaltungsaufwand realisiert werden kann und mit welcher das Verfahren zum Betrieb in besonders einfacher Weise durchzuführen ist. Diese Aufgaben werden durch die Merkmale des Anspruchs 1 beziehungsweise 6 gelöst. In den abhängigen Ansprüchen sind vorteilhafte Weiterbildungen der Erfindung angegeben.

Die rotierende elektrische Maschine weist mindestens zwei Statorwicklungssätze auf und jeder Statorwicklungssatz n Phasenwicklungen umfasst, wobei n≥3 ist und wobei für jeden Statorwicklungssatz jeweils eine zugehörige Umrichtereinheit zur Speisung des Statorwicklungssatzes vorgesehen ist. Beim erfindungsgemässen Verfahren zum Betrieb wird nun der jeweilige Statorwicklungssatz von der zugehörigen Umrichtereinheit gespeist. Erfindungsgemäss werden nun die Ströme von mindestens n-1 Phasenwicklungen eines jeden Statorwicklungssatzes gemessen. Weiterhin ist für jede Umrichtereinheit jeweils eine zugehörige Regelungseinrichtung vorgesehen, wobei jede Umrichtereinheit mittels eines Ansteuersignals der zugehörigen Regelungseinrichtung unabhängig von Regelungseinrichtungen der jeweils anderen Umrichtereinheiten angesteuert wird. Das Ansteuersignal wird in der jeweiligen Regelungseinrichtung aus den gemessenen Strömen eines jeden Statorwicklungssatzes gebildet. Durch die vorstehend genannten Massnahmen des erfindungsgemässen Verfahrens können die elektrischen Grössen der jeweiligen Statorwicklungssätze, insbesondere die Ströme eines jeden Statorwicklungssatzes, vorteilhaft separat und unabhängig geregelt beziehungsweise beeinflusst werden, so dass eine redundante Regelung beziehungsweise Beeinflussung ermöglicht ist. Vorteilhaft kann dadurch die Verfügbarkeit und die Wartungsfreundlichkeit des Gesamtsystems erhöht werden.

Die erfindungsgemässe Vorrichtung zur Durchführung des Verfahrens zum Betrieb einer rotierenden elektrischen Maschine weist jeweils eine für jeden Statorwicklungssatz zur Speisung vorgesehene zugehörige Umrichtereinheit auf. Erfindungsgemäss sind nun Messmittel zur Messung der Ströme von mindestens n-1 Phasenwicklungen eines jeden Statorwicklungssatzes vorgesehen. Desweiteren ist für jede Umrichtereinheit jeweils eine zugehörige Regelungseinrichtung zur Ansteuerung der zugehörigen Umrichtereinheit mittels eines Ansteuersignals unabhängig von Regelungseinrichtungen der jeweils anderen Umrichtereinheiten vorgesehen. Zur Bildung des Ansteuersignals sind jeder Regelungseinrichtung die gemessenen Ströme eines jeden Statorwicklungssatzes zugeführt. Die erfindungsgemässe Vorrichtung ist damit sehr einfach, robust und mit einem geringen Schaltungsaufwand realisierbar, wobei das erfindungsgemässe Verfahren mit der erfindungsgemässen Vorrichtung zudem besonders einfache durchgeführt werden kann. Durch die jeweilige Regelungseinrichtung zur Ansteuerung der zugehörigen Umrichtereinheit unabhängig von Regelungseinrichtungen der jeweils anderen Umrichtereinheiten ist die erfindungsgemässe Vorrichtung redundant aufgebaut, wodurch eine hohe Verfügbarkeit und ein grosses Mass an Wartungsfreundlichkeit des Gesamtsystems ereicht werden kann.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

### Es zeigen:

- Fig. 1: eine erste Ausführungsform einer erfindungsgemässen Vorrichtung zur Durchführung des erfindungsgemässen Verfahrens zum Betrieb einer rotierenden elektrischen Maschine, insbesondere für eine als Synchronmaschine ausgebildete rotierende elektrische Maschine,
- Fig. 2: eine Ausführungsform einer Regelungseinrichtung der Vorrichtung gemäss Fig.1,
- Fig. 3: eine zweite Ausführungsform einer erfindungsgemässen Vorrichtung zur Durchführung des erfindungsgemässen Verfahrens zum Betrieb einer rotierenden elektrischen Maschine, insbesondere für eine als Asynchronmaschine ausgebildete rotierende elektrische Maschine, und
- Fig. 4: eine Ausführungsform einer Regelungseinrichtung der Vorrichtung gemäss Fig. 3.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

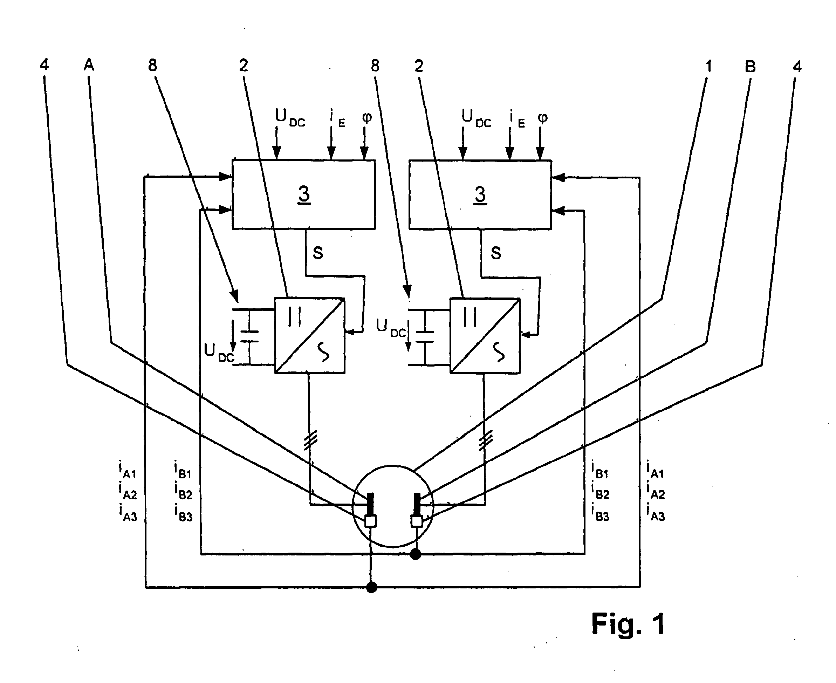

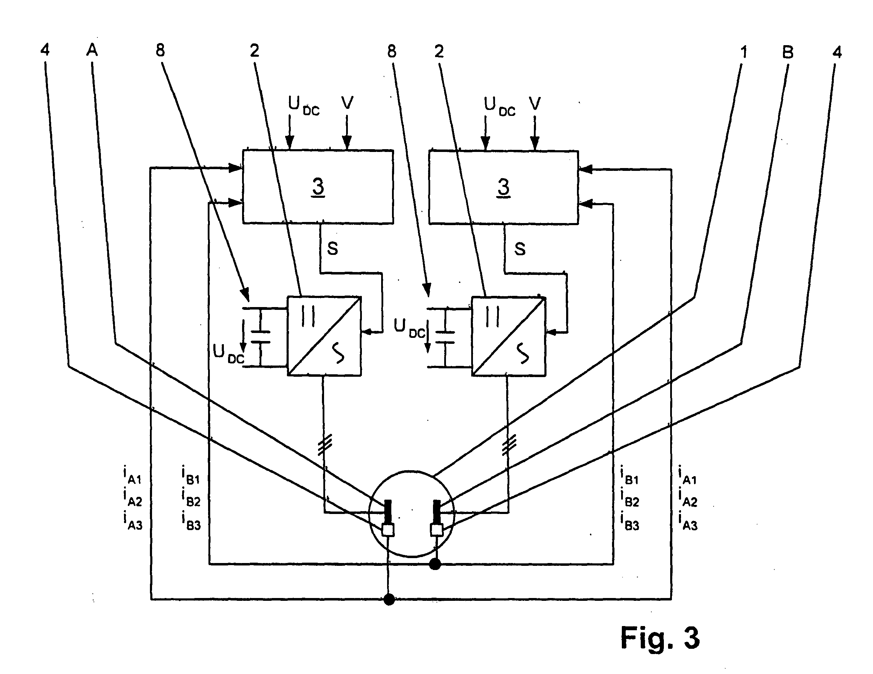

In Fig.1 ist eine erste Ausführungsform einer erfindungsgemässen Vorrichtung zur Durchführung des erfindungsgemässen Verfahrens zum Betrieb einer rotierenden elektrischen Maschine 1, insbesondere für eine als Synchronmaschine ausgebildete rotierende elektrische Maschine 1, gezeigt. Weiterhin ist in Fig. 3 eine zweite Ausführungsform einer erfindungsgemässen Vorrichtung zur Durchführung des erfindungsgemässen Verfahrens zum Betrieb einer rotierenden elektrischen Maschine 1, insbesondere für eine als Asynchronmaschine ausgebildete rotierende elektrische Maschine 1, dargestellt. Die Maschine 1 weist mindestens zwei Statorwicklungssätze A, B auf, d.h. es sind auch mehr als zwei Statorwicklungssätze A, B denkbar. Typischerweise umfasst jeder Statorwicklungssatz A, B n Phasenwicklungen, wobei n≥3 ist. In den in Fig. 1 und Fig. 3 gezeigten Ausführungsform sind zwei Statorwicklungssätze A, B mit jeweils n=3 Phasenwicklungen gezeigt. Gemäss Fig. 1 und Fig. 3 ist für jeden Statorwicklungssatz A, B jeweils eine zugehörige Umrichtereinheit 2 vorgesehen. Der jeweilige Statorwicklungssatz A, B wird von der zugehörigen Umrichtereinheit 2 gespeist.

Beim erfindungsgemässen Verfahren werden nun die Ströme i_{A1}, i_{A2}, i_{A3}; i_{B1}, i_{B2}, i_{B3} von mindestens n-1 Phasenwicklungen eines jeden Statorwicklungssatzes A, B gemessen. In Fig. 1 und Fig. 3 werden zwar die Ströme i_{A1}, i_{A2}, i_{A3}; i_{B1}, i_{B2}, i_{B3} von n=3 Phasenwicklungen eines jeden Statorwicklungssatzes A, B gemessen, allgemein ist es aber ausreichend, nur n-1 Ströme i_{A1}, i_{A2}, i_{A3}; i_{B1}, i_{B2}, i_{B3} zu messen, wodurch sich vorteilhaft eine Vereinfachung ergibt. Zudem ist gemäss Fig. 1 und Fig. 3 für jede Umrichtereinheit 2 jeweils eine zugehörige Regelungseinrichtung 3 vorgesehen und jede Umrichtereinheit 2 wird mittels eines Ansteuersignals S der zugehörigen Regelungseinrichtung 3 unabhängig von Regelungseinrichtungen 3 der jeweils anderen Umrichtereinheiten 2 angesteuert. Ferner wird das Ansteuersignal S in der jeweiligen Regelungseinrichtung 3 aus den gemessenen Strömen i_{A1}, i_{A2}, i_{A3}; i_{B1}, i_{B2}, i_{B3} eines jeden Statorwicklungssatzes A, B gebildet wird. Gemäss Fig. 1 und Fig. 3 sind jeder Regelungseinrichtung 3 zur Bildung des Ansteuersignals S die n=3 gemessenen Ströme i_{A1}, i_{A2}, i_{A3}; i_{B1}, i_{B2}, i_{B3} eines jeden Statorwicklungssatzes A, B zugeführt. Allgemein sind aber jeder Regelungseinrichtung 3 zur Bildung des Ansteuersignals S die mindestens n-1 gemessenen Ströme i_{A1}, i_{A2}, i_{A3}; i_{B1}, i_{B2}, i_{B3} eines jeden Statorwicklungssatzes A, B zugeführt.

Durch die vorstehend genannten Massnahmen des erfindungsgemässen Verfahrens können die elektrischen Grössen der jeweiligen Statorwicklungssätze A, B, insbesondere die Ströme i_{A1}, i_{A2}, i_{A3}; i_{B1}, i_{B2}, i_{B3} eines jeden Statorwicklungssatzes A, B und/oder die Phasenausgangsspannungen der Umrichtereinheit 2, vorteilhaft separat und unabhängig geregelt beziehungsweise beeinflusst werden. Damit ist eine redundante Regelung beziehungsweise Beeinflussung dieser Ströme i_{A1}, i_{A2}, i_{A3}; i_{B1}, i_{B2}, i_{B3} beziehungsweise der Phasenausgangsspannungen der Umrichtereinheit 2 ermöglicht. Vorteilhaft kann dadurch die Verfügbarkeit und die Wartungsfreundlichkeit des Gesamtsystems erhöht werden. Ferner ermöglich das erfindungsgemässe Verfahren sowie die erfindungsgemässe Vorrichtung einen sogenannten Vierquadranten-Betrieb der jeweiligen Umrichtereinheit 2.

Weiterhin ist die erfindungsgemässe Vorrichtung sehr einfach, robust und mit einem geringen Schaltungsaufwand realisierbar, wobei das erfindungsgemässe Verfahren mit der erfindungsgemässen Vorrichtung zudem besonders einfache durchgeführt werden kann. Durch die jeweilige Regelungseinrichtung 3 zur Ansteuerung der zugehörigen Umrichtereinheit 2 unabhängig von Regelungseinrichtungen 3 der jeweils anderen Umrichtereinheiten 2 ist die erfindungsgemässe Vorrichtung redundant aufgebaut, wodurch eine hohe Verfügbarkeit und ein grosses Mass an Wartungsfreundlichkeit des Gesamtsystems ereicht werden kann. Ferner ermöglich das erfindungsgemässe Verfahren mit der erfindungsgemässen Vorrichtung einen sogenannten Vierquadranten-Betrieb der jeweiligen Umrichtereinheit 2.

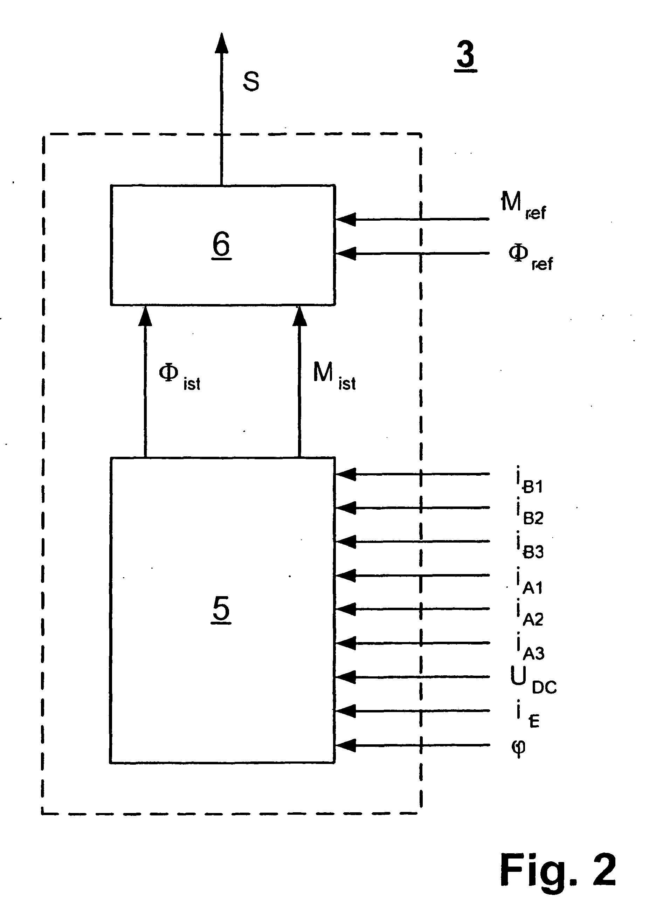

Gemäss Fig. 1 und Fig. 2 ist mit der jeweiligen Umrichtereinheit 2 ein kapazitiver Energiespeicher 8 verbunden. Vorteilhaft ergibt sich daraus, dass jede Umrichtereinheit 2 über den zugehörigen kapazitiven Energiespeicher 8 beispielsweise von einem separaten Gleichspannungsnetz gespeist werden kann, wodurch sich die Redundanz erhöht. Alternativ kann auch jede Umrichtereinheit 2 über den zugehörigen kapazitiven Energiespeicher 8 und einen an den jeweiligen kapazitiven Energiespeicher 8 angeschlossenen Gleichrichter jeweils von einem separaten Wechselspannungsnetz gespeist werden, wodurch sich die Redundanz ebenfalls erhöht. Ferner kann beispielsweise bei einem Fehler in einem Netz eine Umrichtereinheit 2 den zugehörigen kapazitiven Energiespeicher 8 mit elektrischer Energie der rotierenden elektrischen Maschine 1 speisen und so den Fehler des an den kapazitiven Energiespeicher 8 angeschlossenen Netzes zumindest teilweise ausgleichen, während die weitere Umrichtereinheit 2, welche über ihren zugehörigen kapazitiven Energiespeicher 8 von einem separaten Netz gespeist ist, die rotierende elektrische Maschine 1 speist und damit weiter antreibt. Selbstverständlich ist es auch denkbar, dass die einzelnen kapazitiven Energiespeicher 8 miteinander verbunden sind, oder dass der kapazitive Energiespeicher 8 als ein einziger gemeinsamer kapazitiver Energiespeicher 8 ausgeführt ist, mit welchem dann die Umrichtereinheiten 2 verbunden sind. Allgemein ist es durch den vorstehend genannten redundanten Aufbau der erfindungsgemässen Vorrichtung beziehungsweise auch durch das erfindungsgemässe Verfahren möglich, dass beispielsweise eine Umrichtereinheit 2 zu Wartungszwecken abgeschaltet wird und nach der Wartung wieder eingeschaltet wird, während die andere Umrichtereinheit 2 weiter betrieben wird und die rotierende elektrische Maschine 1 speist.

Bei einer als Synchronmaschine ausgeführten rotierenden elektrischen Maschine 1 wird allgemein in der jeweiligen Regelungseinrichtung 3 aus den gemessenen Strömen i_{A1}, i_{A2}, i_{A3}; i_{B1}, i_{B2}, i_{B3} eines jeden Statorwicklungssatzes A, B, aus der Gleichspannung U_{DC} des mit der jeweiligen Umrichtereinheit 2 verbundenen kapazitiven Energiespeichers 8 und aus der Rotorposition ϕ (Polradposition ϕ) der aktuelle Drehmomentwert Mᵢₛₜ und der aktuelle Statorflusswert Φᵢₛₜ gebildet. Bei einer solche Synchronmaschine, welche keine Erregerwicklung und damit auch keinen Erregerstrom i_{E} benötigt, handelt es sich gängigerweise um eine Permanentmagnetmaschine. Ist bei der Synchronmaschine hingegen eine Erregerwicklung vorgesehen, so bedeutet dies für das erfindungsgemässe Verfahren, dass der aktuelle Drehmomentwert Mᵢₛₜ und der aktuelle Statorflusswert Φᵢₛₜ zusätzlich zu den vorstehend genannten physikalischen Grössen aus dem Erregerstrom i_{E} der Erregerwicklung der Synchronmaschine gebildet wird. In Fig. 2 ist dazu für eine Synchronmaschine mit Erregerwicklung eine Ausführungsform der Regelungseinrichtung 3 der Vorrichtung nach Fig. 1 gezeigt. Darin weist jede Regelungseinrichtung 3 eine Berechnungseinheit 5 zur Bildung des aktuellen Drehmomentwertes Mᵢₛₜ und des aktuellen Statorflusswertes Φᵢₛₜ aus den gemessenen Strömen i_{A1}, i_{A2}, i_{A3}; i_{B1}, i_{B2}, i_{B3} eines jeden Statorwicklungssatzes A, B, aus der Gleichspannung U_{DC} des kapazitiven Energiespeichers 8, aus der Rotorposition ϕ und aus dem Erregerstrom i_{E} auf. Gemäss Fig. 2 sind die vorstehend genannten Grössen der Berechnungseinheit 5 zugeführt. Es sei erwähnt, dass die Rotorposition ϕ gemessen werden kann oder eine berechnete Grösse ist. Der Erregerstrom i_{E} und die Gleichspannung U_{DC} des kapazitiven Energiespeichers 8 sind jeweils gemessene Grössen. Wie schon erwähnt, ist es mit Vorteil lediglich nötig, allgemein n-1 Ströme i_{A1}, i_{A2}, i_{A3}; i_{B1}, i_{B2}, i_{B3} eines jeden Statorwicklungssatzes A, B zu messen. Der jeweilige nicht gemessene Strom i_{A1}, i_{A2}, i_{A3}; i_{B1}, i_{B2}, i_{B3} eines jeden Statorwicklungssatzes A, B kann vorteilhaft aus den gemessen Strömen i_{A1}, i_{A2}, i_{A3}; i_{B1}, i_{B2}, i_{B3} in der Berechnungseinheit 5 berechnet werden. Damit kann für jeden Statorwicklungssatz A, B ein zur Messung von Strömen normalerweise notwendiger, jedoch teurer, platzraubender und zudem störungsanfälliger Stromwandler eingespart werden.

Verfahrensmässig wird durch Ausregeln des aktuellen Drehmomentwertes Mᵢₛₜ auf einen vorgebbaren Referenzdrehmomentwert M_{ref} und durch Ausregeln des aktuellen Statorflusswertes Φᵢₛₜ auf einen vorgebbaren Referenzstatorflusswert Φ_{ref} das Ansteuersignal S erzeugt. Es sei erwähnt, dass die Erzeugung des Ansteuersignals S durch die vorstehend genannte Ausregelung mittels eines Pulsweiten-Modulationsverfahrens, mittels eines Direkten Drehmomentregelungs-Verfahrens (DTC - Direct Torque Control) oder mittels eines Verfahrens mit optimierten Pulsmustern erfolgen kann. Gemäss Fig. 2 weist jede Regelungseinrichtung 3 dazu eine Reglereinheit 6 zur Ausregelung des aktuellen Drehmomentwertes Mᵢₛₜ auf den vorgebbaren Referenzdrehmomentwert M_{ref} und zur Ausregelung des aktuellen Statorflusswertes Φᵢₛₜ auf den vorgebbaren Referenzstatorflusswert Φ_{ref} auf, wobei am Ausgang der Reglereinheit 6 das durch die Ausregelung erzeugte Ansteuersignal S anliegt. Gemäss dem erzeugten Ansteuersignal S folgt somit jede Umrichtereinheit 2 ihrem zugehörigen Referenzdrehmomentwert M_{ref} und Referenzstatorflusswert Φ_{ref} und damit vorteilhaft nur den Vorgaben ihrer jeweils zugehörigen Regelungseinrichtung 3.

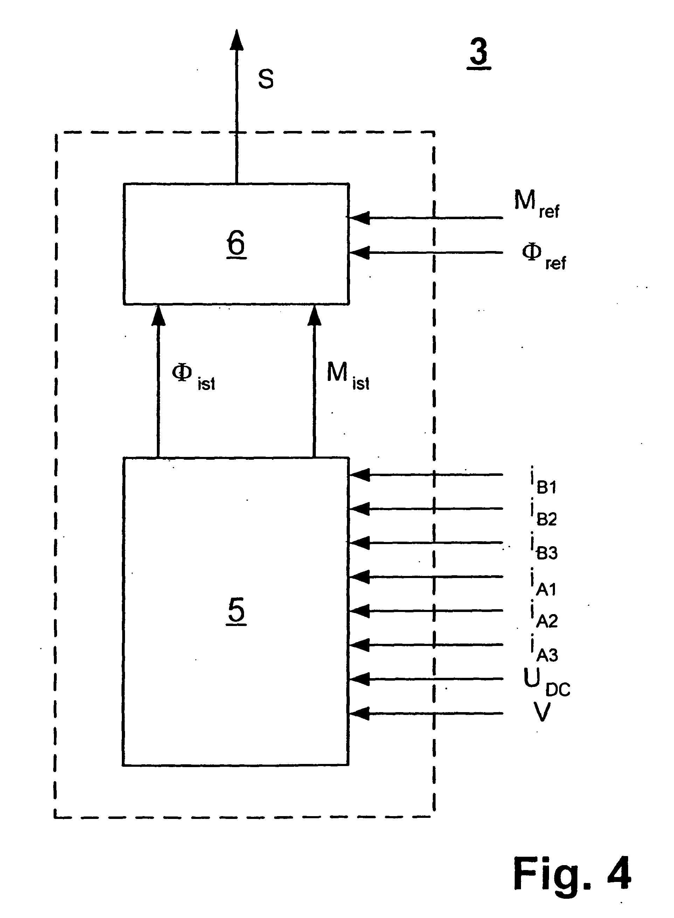

Bei einer als Asynchronmaschine ausgeführten rotierenden elektrischen Maschine 1 wird in der jeweiligen Regelungseinrichtung 3 aus den gemessenen Strömen i_{A1}, i_{A2}, i_{A3}; i_{B1}, i_{B2}, i_{B3} eines jeden Statorwicklungssatzes A, B, aus der Gleichspannung U_{DC} des mit der jeweiligen Umrichtereinheit 2 verbundenen kapazitiven Energiespeichers 8 und aus der Rotorgeschwindigkeit V der aktuelle Drehmomentwert Mᵢₛₜ und der aktuelle Statorflusswert Φᵢₛₜ gebildet. In Fig. 4 ist dazu eine Ausführungsform der Regelungseinrichtung 3 der Vorrichtung nach Fig. 3 gezeigt. Darin weist jede Regelungseinrichtung 3 eine Berechnungseinheit 5 zur Bildung des aktuellen Drehmomentwertes Mᵢₛₜ und des aktuellen Statorflusswertes Φᵢₛₜ aus den gemessenen Strömen i_{A1}, i_{A2}, i_{A3;} i_{B1}, i_{B2}, i_{B3} eines jeden Statorwicklungssatzes A, B, aus der Gleichspannung U_{DC} des kapazitiven Energiespeichers 8 sowie aus der Rotorgeschwindigkeit V auf. Gemäss Fig. 4 sind die vorstehend genannten Grössen der Berechnungseinheit 5 zugeführt. Es sei erwähnt, dass die Rotorgeschwindigkeit V gemessen werden kann und somit eine gemessene Grösse ist. Die Gleichspannung U_{DC} des kapazitiven Energiespeichers 8 ist ebenfalls eine gemessene Grösse. Wie schon bei der Synchronmaschine erwähnt, ist es mit Vorteil lediglich nötig, allgemein n-1 Ströme i_{A1}, i_{A2}, i_{A3}; i_{B1}, i_{B2}, i_{B3} eines jeden Statorwicklungssatzes A, B zu messen. Der jeweilige nicht gemessene Strom i_{A1}, i_{A2}, i_{A3}; i_{B1}, i_{B2}, i_{B3} eines jeden Statorwicklungssatzes A, B kann vorteilhaft aus den gemessen Strömen i_{A1}, i_{A2}, i_{A3}; i_{B1}, i_{B2}, i_{B3} in der Berechnungseinheit 5 berechnet werden. Damit kann für jeden Statorwicklungssatz A, B ein zur Messung von Strömen normalerweise notwendiger, jedoch teurer, platzraubender und zudem störungsanfälliger Stromwandler eingespart werden.

Bezüglich des erfindungsgemässen Verfahrens wird durch Ausregeln des aktuellen Drehmomentwertes Mᵢₛₜ auf einen vorgebbaren Referenzdrehmomentwert M_{ref} und durch Ausregeln des aktuellen Statorflusswertes Φᵢₛₜ auf einen vorgebbaren Referenzstatorflusswert Φ_{ref}, wie auch bereits bei der Synchronmaschine erwähnt, das Ansteuersignal S erzeugt. Es sei erwähnt, dass die Erzeugung des Ansteuersignals S durch die vorstehend genannte Ausregelung mittels eines Pulsweiten-Modulationsverfahrens, mittels eines Direkten Drehmomentregelungs-Verfahrens (DTC - Direct Torque Control) oder mittels eines Verfahrens mit optimierten Pulsmustern erfolgen kann. Gemäss Fig. 4 weist jede Regelungseinrichtung 3 dazu eine Reglereinheit 6 zur Ausregelung des aktuellen Drehmomentwertes Mᵢₛₜ auf den vorgebbaren Referenzdrehmomentwert M_{ref} und zur Ausregelung des aktuellen Statorflusswertes Φᵢₛₜ auf den vorgebbaren Referenzstatorflusswert Φ_{ref} auf, wobei am Ausgang der Reglereinheit 6 durch die Ausregelung das erzeugte Ansteuersignal S anliegt. Nach dem erzeugten Ansteuersignal S folgt auch bei einer als Asynchronmaschine ausgebildeten rotierenden elektrischen Maschine 1 jede Umrichtereinheit 2 ihrem zugehörigen Referenzdrehmomentwert M_{ref} und Referenzstatorflusswert Φ_{ref} und demzufolge mit Vorteil nur den Vorgaben ihrer jeweils zugehörigen Regelungseinrichtung 3.

### Bezugszeichenliste

- 1: rotierende elektrische Maschine
- 2: Umrichtereinheit
- 3: Regelungseinrichtung
- 4: Messmittel
- 5: Berechnungseinheit
- 6: Reglereinheit
- 8: kapazitiver Energiespeicher
- A, B: Statorwicklungssätze der rotierenden elektrischen Maschine

## Patentansprüche

1. Verfahren zum Betrieb einer rotierenden elektrischen Maschine (1), welche Maschine (1) mindestens zwei Statorwicklungssätze (A, B) aufweist und jeder Statorwicklungssatz (A, B) n Phasenwicklungen umfasst, wobei n≥3 ist und wobei für jeden Statorwicklungssatz (A, B) jeweils eine zugehörige Umrichtereinheit (2) vorgesehen ist,
bei dem der jeweilige Statorwicklungssatz (A, B) von der zugehörigen Umrichtereinheit (2) gespeist wird,
**dadurch gekennzeichnet,**
**dass** die Ströme (i_{A1}, i_{A2}, i_{A3}; i_{B1}, i_{B2}, i_{B3}) von mindestens n-1 Phasenwicklungen eines jeden Statorwicklungssatzes (A, B) gemessen werden,
**dass** für jede Umrichtereinheit (2) jeweils eine zugehörige Regelungseinrichtung (3) vorgesehen ist und jede Umrichtereinheit (2) mittels eines Ansteuersignals (S) der zugehörigen Regelungseinrichtung (3) unabhängig von Regelungseinrichtungen (3) der jeweils anderen Umrichtereinheiten (2) angesteuert wird, und
**dass** das Ansteuersignal (S) in der jeweiligen Regelungseinrichtung (3) aus den gemessenen Strömen (i_{A1}, i_{A2}. i_{A3}: i_{B1}, i_{B2}, i_{B3}) eines jeden Statorwicklungssatzes (A, B) gebildet wird.

2. Verfahren nach Anspruch 1, **dadurch gekennzeichnet, dass** bei einer als Synchronmaschine ausgeführten rotierenden elektrischen Maschine (1) in der jeweiligen Regelungseinrichtung (3) aus den gemessenen Strömen (i_{A1} i_{A2}, i_{A3}; i_{B1}, i_{B2}, i_{B3}) eines jeden Statorwicklungssatzes (A, B), aus der Gleichspannung (U_{DC}) eines mit der jeweiligen Umrichtereinheit (2) verbundenen kapazitiven Energiespeichers (8) und aus der Rotorposition (ϕ) der aktuelle Drehmomentwert (Mᵢₛₜ) und der aktuelle Statorflusswert (Φᵢₛₜ) gebildet wird.

3. Verfahren nach Anspruch 2, **dadurch gekennzeichnet, dass** der aktuelle Drehmomentwert (Mᵢₛₜ) und der aktuelle Statorflusswert (Φᵢₛₜ) zusätzlich aus dem Erregerstrom (i_{E}) gebildet wird.

4. Verfahren nach Anspruch 1, **dadurch gekennzeichnet, dass** bei einer als Asynchronmaschine ausgeführten rotierenden elektrischen Maschine (1) in der jeweiligen Regelungseinrichtung (3) aus den s den gemessenen Strömen (i_{A1}, i_{A2}, i_{A3}; i_{B1}, i_{B2}, i_{B3}) eines jeden Statorwicklungssatzes (A, B), aus der Gleichspannung (U_{DC}) eines mit der jeweiligen Umrichtereinheit (2) verbundenen kapazitiven Energiespeichers (8) und aus der Rotorgeschwindigkeit (V) der aktuelle Drehmomentwert (Mᵢₛₜ) und der aktuelle Statorflusswert (Φᵢₛₜ) gebildet wird.

5. Verfahren nach einem der Ansprüche 2, 3 oder 4, **dadurch gekennzeichnet, dass** durch Ausregeln des aktuellen Drehmomentwertes (Mᵢₛₜ) auf einen vorgebbaren Referenzdrehmomentwert (M_{ref}) und durch Ausregeln des aktuellen Statorflusswertes ((Φᵢₛₜ) auf einen vorgebbaren Referenzstatorflusswert (Φ_{ref}) das Ansteuersignal (S) erzeugt wird.

6. Vorrichtung zur Durchführung eines Verfahrens zum Betrieb einer rotierenden elektrischen Maschine (1), welche Maschine (1) mindestens zwei Statorwicklungssätze (A, B) aufweist und jeder Statorwicklungssatz (A, B) n Phasenwicklungen umfasst, wobei n≥23 ist, und
mit jeweils einer für jeden Statorwicklungssatz (A, B) zur Speisung vorgesehenen zugehörigen Umrichtereinheit (2),
**dadurch gekennzeichnet,**
**dass** Messmittel (4) zur Messung der Ströme (i_{A1}, i_{A2}, i_{A3}; i_{B1}, i_{B2}, i_{B3}) von mindestens n-1 Phasenwicklungen eines jeden Statorwicklungssatzes (A, B) vorgesehen sind,
**dass** für jede Umrichtereinheit (2) jeweils eine zugehörige Regelungseinrichtung-(3) zur Ansteuerung der zugehörigen Umrichtereinheit (2) mittels eines Ansteuersignals (S) unabhängig von R.egelungseinrichtungen (3) der jeweils anderen Umrichtereinheiten (1) vorgesehen ist, und
**dass** jeder Regelungseinrichtung (3) zur Bildung des Ansteuersignals (S) die gemessenen Ströme (i_{A1}, i_{A2}, i_{A3}; i_{B1}, i_{B2}, i_{B3}) eines jeden Statorwicklungssatzes (A, B) zugeführt sind.

7. Vorrichtung nach Anspruch 6, **dadurch gekennzeichnet, dass** jede Regelungseinrichtung (3) bei einer als Synchronmaschine ausgeführten rotierenden elektrischen Maschine (1) eine Berechnungseinheit (5) zur Bildung des aktuellen Drehmomentwertes (Mᵢₛₜ) und des aktuellen Statorflusswertes (Φᵢₛₜ) aus den gemessenen Strömen (i_{A1}, i_{A2}, i_{A3}; i_{B1}, i_{B2}, i_{B3}) eines jeden Statorwicklungssatzes (A, B), aus der Gleichspannung (U_{DC}) eines mit der jeweiligen Umrichtereinheit (2) verbundenen kapazitiven Energiespeichers (8) und aus der Rotorposition (ϕ) aufweist.

8. Vorrichtung nach Anspruch 7, **dadurch gekennzeichnet, dass** der Berechnungseinheit (5) zur Bildung des aktuellen Drehmomentwertes (Mᵢₛₜ) und des aktuellen Statorflusswertes (ϕiₛₜ) zusätzlich der Erregerstrom (i_{E}) zugeführt ist.

9. Vorrichtung nach Anspruch 6, **dadurch gekennzeichnet, dass** jede Regelungseinrichtung (3) bei einer als Asynchronmaschine ausgeführten rotierenden elektrischen Maschine (1) eine Berechnungseinheit (5) zur Bildung des aktuellen Drehmomentwertes (Mᵢₛₜ) und des aktuellen Statorflusswertes aus den gemessenen Strömen (i_{A1}, i_{A2}, i_{A3}; i_{B1}, i_{B2}, i_{B3}) eines jeden Statorwicklungssatzes (A, B), aus der Gleichspannung (U_{DC}) eines mit der jeweiligen Umrichtereinheit (2) verbundenen kapazitiven Energiespeichers (8) und aus der Rotorgeschwindigkeit (V) aufweist.

10. Vorrichtung nach einem der Ansprüche 7, 8 oder 9, **dadurch gekennzeichnet, dass** jede Regelungseinrichtung (3) eine Reglereinheit (6) zur Ausregelung des aktuellen Drehmomentwertes (Mᵢₛₜ) auf einen vorgebbaren Referenzdrehmomentwert (M_{ref}) und zur Ausregelung des aktuellen Statorflusswertes (ϕᵢₛₜ) auf einen vorgebbaren Referenzstatorflusswert (Φ_{ref}) aufweist, wobei am Ausgang Reglereinheit (6) das Ansteuersignal (S) anliegt.

## Claims

1. Method for operation of a rotating electrical machine (1) which has at least two stator winding sets (A, B), and each stator winding set (A, B) comprises n phase windings, where n≥3, and with an associated converter unit (2) being provided for each stator winding set (A, B),
in which the respective stator winding set (A, B) is fed from the associated converter unit (2),
**characterized**
**in that** the currents (i_{A1}, i_{A2}, i_{A3}; i_{B1}, i_{B2}, i_{B3}) in at least n-1 phase windings of each stator winding set (A, B) are measured,
**in that** a respectively associated control device (3) is provided for each converter unit (2) and each converter unit (2) is driven by means of a drive signal (S) from the associated control device (3) independently of control devices (3) for each of the other converter units (2), and
**in that** the drive signal (S) is formed in the respective control device (3) from the measured currents (i_{A1}, i_{A2}, i_{A3}; i_{B1}, i_{B2}, i_{B3}) in each stator winding set (A, B).

2. Method according to Claim 1, **characterized in that**, in a rotating electrical machine (1) in the form of a synchronous machine, the actual torque value (M_{act}) and the actual stator flux value (Φ_{act}) are formed in the respective control device (3) from the measured currents (i_{A1}, i_{A2}, i_{A3}; i_{B1}, i_{B2}, i_{B3}) in each stator winding set (A, B), from the DC voltage (U_{DC}) of a capacitive energy store (8) which is connected to the respective converter unit (2), and from the rotor position (ϕ).

3. Method according to Claim 2, **characterized in that** the actual torque value (M_{act}) and the actual stator flux value (Φ_{act}) are additionally formed from the field current (i_{E}) .

4. Method according to Claim 1, **characterized in that**, in a rotating electrical machine (1) in the form of an asynchronous machine, the actual torque value (M_{act}) and the actual stator flux value (Φ_{act}) are formed in the respective control device (3) from the measured currents (i_{A1}, i_{A2}, i_{A3}; i_{B1}, i_{B2}, i_{B3}) in each stator winding set (A, B), from the DC voltage (U_{DC}) of a capacitive energy store (8) which is connected to the respective converter unit (2), and from the rotor speed (V).

5. Method according to one of Claims 2, 3, or 4, **characterized in that** the drive signal (S) is produced by regulation of the actual torque value (M_{act}) at a predeterminable reference torque value (M_{ref}), and by regulation of the actual stator flux value (Φ_{act}) at a predeterminable reference stator flux value (Φ_{ref}).

6. Apparatus for carrying out a method for operation of a rotating electrical machine (1) which has at least two stator winding sets (A, B), and each stator winding set (A, B) comprises n phase windings, where n≥3, and
in each case having an associated converter unit (2) which is provided in order to feed each stator winding set (A, B),
**characterized**
**in that** measurement means (4) are provided in order to measure the currents (i_{A1}, i_{A2}, i_{A3}; i_{B1}, i_{B2}, i_{B3}) in at least n-1 phase windings of each stator winding set (A, B),
**in that** a respectively associated control device (3) is provided for each converter unit (2), in order to drive the associated converter unit (2) by means of a drive signal (S) independently of control devices (3) for the respective other converter units (1), and
**in that** each control device (3) is supplied with the measured currents (i_{A1}, i_{A2}, i_{A3}; i_{B1}, i_{B2}, i_{B3}) in each stator winding set (A, B) in order to form the drive signal (S).

7. Apparatus according to Claim 6, **characterized in that**, if the rotating electrical machine (1) is in the form of a synchronous machine, each control device (3) has a calculation unit (5) for formation of the actual torque value (M_{act}) and of the actual stator flux value (Φ_{act}) from the measured currents (i_{A1}, i_{A2}, i_{A3}; i_{B1}, i_{B2}, i_{B3}) in each stator winding set (A, B), from the DC voltage (U_{DC}) of a capacitive energy store (8) which is connected to the respective converter unit (2), and from the rotor position (ϕ).

8. Apparatus according to Claim 7, **characterized in that** the calculation unit (5) is additionally supplied with the field current (i_{E}) in order to form the actual torque value (M_{act}) and the actual stator flux value (Φ_{act}).

9. Apparatus according to Claim 6, **characterized in that**, if the rotating electrical machine (1) is in the form of an asynchronous machine, each control device (3) has a calculation unit (S) for formation of the actual torque value (M_{act}) and the actual stator flux value (Φ_{act}) from the measured currents (i_{A1}, i_{A2}, i_{A3}; i_{B1}, i_{B2}, i_{B3}) in each stator winding set (A, B), from the DC voltage (U_{DC}) of a capacitive energy store (8) which is connected to the respective converter unit (2), and from the rotor speed (V).

10. Apparatus according to one of Claims 7, 8 or 9, **characterized in that** each control device (3) has a regulator unit (6) for regulation of the actual torque value (M_{act}) at a predeterminable reference torque value (M_{ref}), and for regulation of the actual stator flux value (Φ_{act}) at a predeterminable reference stator flux value (Φ_{ref}), with the drive signal (S) being produced at the output of the regulated unit (6).

## Revendications

1. Procédé pour l'exploitation d'une machine électrique rotative (1), laquelle machine (1) présente au moins deux bobinages de stator (A, B) et chaque bobinage de stator (A, B) comprenant n enroulements de phase, avec n ≥ 3, et une unité de conversion (2) associée étant respectivement prévue pour chaque bobinage de stator (A, B), avec lequel le bobinage de stator respectif (A, B) est alimenté par l'unité de conversion (2) associée,
**caractérisé en ce que**
les courants (i_{A1}, i_{A2}, i_{A3}, i_{B1}, i_{B2}, i_{B3}) de au moins n-1 enroulements de phase de chaque bobinage de stator (A, B) sont mesurés,
**en ce que**, pour chaque unité de conversion (2), on prévoit respectivement un dispositif de régulation (3) associé et **en ce que** chaque unité de conversion (2) est alimentée à l'aide d'un signal de commande d'amorçage (S) du dispositif de régulation (3) associé indépendamment des dispositifs de régulation (3) des autres unités de conversion (2) respectives, et
**en ce que** le signal de commande d'amorçage (S) dans le dispositif de régulation (3) respectif est formé à partir des courants mesurés (i_{A1}, i_{A2}, i_{A3}, i_{B1}, i_{B2}, i_{B3}) de chaque bobinage de stator (A, B).

2. Procédé selon la revendication 1, **caractérisé en ce qu'**avec une machine électrique rotative (1) réalisée en tant que machine synchrone, dans le dispositif de régulation respectif (3), on forme à partir des courants mesurés (i_{A1}, i_{A2}, i_{A3}, i_{B1}, i_{B2}, i_{B3}) de chacun des bobinages de stator (A, B), à partir de la tension continue (U_{DC}) d'un accumulateur d'énergie capacitif (8) en liaison avec l'unité de conversion (2) respective et à partir de la position du rotor (ϕ), la valeur actuelle du couple de rotation (Mᵢₛₜ) et la valeur actuelle du flux de stator (ϕᵢₛₜ).

3. Procédé selon la revendication 2, **caractérisé en ce que** la valeur actuelle du couple de rotation (Mᵢₛₜ) et la valeur actuelle du flux de rotor (ϕᵢₛₜ) sont formées de manière supplémentaire à partir du courant d'excitation (i_{E}) .

4. Procédé selon la revendication 1, **caractérisé en ce qu'**avec une machine électrique rotative (1) réalisée en tant que machine asynchrone, dans le dispositif de régulation (3) respectif, on forme à partir des courants mesurés (i_{A1}, i_{A2}, i_{A3}, i_{B1}, i_{B2}, i_{B3}) de chaque bobinage de stator (A, B), à partir de la tension continue (U_{DC}) d'un accumulateur d'énergie capacitif (8) en liaison avec l'unité de conversion (2) respective et à partir de la vitesse du rotor (V), la valeur actuelle du couple de rotation (Mᵢₛₜ) et la valeur actuelle du flux de stator (ϕᵢₛₜ).

5. Procédé selon l'une des revendications 2, 3, ou 4, **caractérisé en ce qu'**avec un réglage parfait de la valeur actuelle du couple de rotation (Mᵢₛₜ) à une valeur de référence de couple de rotation pouvant être prédéterminé (M_{ref}) et avec un réglage parfait de la valeur actuelle du flux de stator (ϕᵢₛₜ) à une valeur de référence de flux de stator pouvant être déterminée à l'avance (Φ_{ref}), on génère le signal de commande d'amorçage S.

6. Dispositif pour la mise en oeuvre d'un procédé pour l'exploitation d'une machine électrique rotative (1), laquelle machine (1) présente au moins deux bobinages de stator (A, B) et chaque bobinage de stator (A, B) comprenant n enroulements de phase, avec n ≥ 3, et
avec respectivement une unité de conversion (2) associée prévue pour l'alimentation pour chaque bobinage de stator (A, B),
**caractérisé en ce que**
des moyens de mesure (4) pour mesurer les courants (i_{A1}, i_{A2}, i_{A3}, i_{B1}, i_{B2}, i_{B3}) de au moins n-1 enroulements de phase de chaque bobinage de stator (A, B) sont prévus,
**en ce que** pour chaque unité de conversion (2) on prévoit respectivement un dispositif de régulation (3) associé pour la commande de l'unité de conversion (2) associée à l'aide d'un signal de commande d'amorçage (S) indépendamment des dispositifs de régulation (3) des autres unités de conversion (2) respectives, et
**en ce que** l'on fournit à chaque dispositif de régulation (3), pour la formation du signal de commande d'amorçage (S), les courants mesurés (i_{A1}, i_{A2}, i_{A3}, i_{B1}, i_{B2}, i_{B3}) de chaque bobinage de stator (A, B).

7. Dispositif selon la revendication 6, **caractérisé en ce que** chaque dispositif de régulation (3), en cas de machine électrique rotative (1) réalisée en tant que machine synchrone, présente une unité de calcul (5) pour former la valeur actuelle du couple de rotation (Mᵢₛₜ) et la valeur actuelle du flux de stator (ϕᵢₛₜ) à partir des courants mesurés (i_{A1}, i_{A2}, i_{A3}, i_{B1}, i_{B2}, i_{B3}) de chaque bobinage de stator (A, B), à partir de la tension continue (U_{DC}) d'un accumulateur d'énergie capacitif (8) en liaison avec l'unité de conversion (2) respective et à partir de la position du rotor (ϕ).

8. Dispositif selon la revendication 7, **caractérisé en ce que** l'on transmet en plus à l'unité de calcul (5), pour la formation de la valeur actuelle du couple de rotation (Mᵢₛₜ) et de la valeur actuelle du flux de stator (Φᵢₛₜ), le courant d'excitation (i_{E}) .

9. Dispositif selon la revendication 6, **caractérisé en ce que** chaque dispositif de régulation(3), en cas de machine électrique rotative (1) réalisée en tant que machine asynchrone, présente une unité de calcul (5) pour former la valeur actuelle du couple de rotation (Mᵢₛₜ) et la valeur actuelle du flux de stator (ϕᵢₛₜ) à partir des courants mesurés (i_{A1}, i_{A2}, i_{A3}, i_{B1}, i_{B2}, i_{B3}) de chaque bobinage de stator (A, B), à partir de la tension continue (U_{DC}) d'un accumulateur d'énergie capacitif (8) en liaison avec l'unité de conversion (2) respective, et à partir de la vitesse du rotor (V).

10. Dispositif selon l'une quelconque des revendications 7, 8, ou 9, **caractérisé en ce que** chaque dispositif de régulation (3) présente une unité de régulation (6) pour le réglage parfait de la valeur actuelle du couple de rotation (Mᵢₛₜ) à une valeur de référence de couple de rotation pouvant être prédéterminée (M_{ref}) et pour le réglage parfait de la valeur actuelle du flux de stator (ϕᵢₛₜ) à une valeur de référence de flux de stator pouvant être prédéterminée (ϕ_{ref}), le signal de commande d'amorçage (S) étant appliqué à la sortie de l'unité de régulation (6).
